# EUROPÄISCHE PATENTANMELDUNG

(11) **EP 0 822 634 A1**
(43) Veröffentlichungstag der Anmeldung: **04.02.1998**
(21) Anmeldenummer: 97250217.3
(22) Anmeldetag: 21.07.1997
(51) Int. Cl.: H02G 5/06

(54) **Verfahren zum axialen Fixieren eines scheibenförmigen Stützisolators am rohrförmigen Aussenleiter**

(30) Priorität: 31.07.1996 DE 19632398
(71) Anmelder: SIEMENS AKTIENGESELLSCHAFT, 80333 München (DE)
(72) Erfinder: Kelch, Thomas, 13465 Berlin (DE); Bräunlich, Christoph, 12529 Schönefeld (DE)

(57) **Zusammenfassung**

Zur axialen Fixierung eines scheibenförmigen Stützisolators (2) im rohrförmigen Außenleiter (3) einer gasisolierten Rohrleiteranlage dienen zwei Ringelektroden (4,5), die beidseits des Stützisolators positioniert und mittels von außen vorgenommener gasdichter Lochschweißungen (6) mit dem Außenleiter (3) verbunden werden.

## Beschreibung

Die Erfindung liegt auf dem Gebiet der Energieverteilung und ist bei der Montage von scheibenförmigen Stützisolatoren in gasisolierten Rohrleiteranlagen anzuwenden. Derartige Anlagen werden abschnittsweise vorgefertigt, die vorgefertigten Abschnite zur Trasse transportiert und dann an oder in der Trasse durch Schweißen, mittels Steckverbindungen und mittels Flanschverbindungen miteinander verbunden (Siemens Prospekt: "Hochleistungsübertragung mit SF6-Rohrleitern", Bestell-Nr. E 121/1448, 1975). - Die einzelnen vorgefertigten Abschnitte bestehen aus einem oder mehreren rohrförmigen Innenleitern und einem ebenfalls rohrförmigen Außenleiter. Der bzw. die Innenleiter werden mit Hilfe von isolierenden Abstandhaltern im Außenleiter gehalten, wozu u.a. scheibenförmige Stützisolatoren verwendet werden. Scheibenförmige Stützisolatoren, die an einem Ende eines Außenleiterabschnittes angeordnet sind, werden häufig durch Verwendung von zwei Ringelektroden am Außenleiter fixiert.

Bei einer bekannten Energieübertragungsanlage dieser Art (US-A 4,161,621) werden die scheibenförmigen Stützisolatoren im Außenleiter durch je zwei Ringelektroden fixiert, die mit Hilfe eines Distanzstückes in vorbestimmtem Abstand zueinander angeordnet sind. Die Montage erfolgt so, daß zunächst die beiden Ringelektroden am Stützisolator befestigt werden, danach wird der Stützisolator auf den Innenleiter aufgeschoben. Der Innenleiter mit dem Stützisolator wird in den Außenleiter eingeführt und schließlich wird eine der beiden Ringelektroden mit dem Außenleiter verschweißt. Diese Schweißung wird auf der Innenseite des Außenleiters durchgeführt.

Ausgehend von einer Energieübertragungsanlage mit den Merkmalen des Oberbegriffs des Patentanspruchs 1 und einem Verfahren zum axialen Fixieren eines scheibenförmigen Stützisolators in einem rohrförmigen Außenleiter einer gasisolierten Energieübertragungsanlage mit den Merkmalen des Oberbegriffes des Patentanspruches 2 liegt der Erfindung die Aufgabe zugrunde, den Aufwand zur Fixierung von scheibenförmigen Stützisolatoren zu verringern.

Zur Lösung dieser Aufgabe ist gemäß der Erfindung vorgesehen, daß die Ringelektroden mit dem Außenleiter durch mehrere auf wenigstens einer Umfangslinie verteilt angeordnete gasdichte Lochschweißungen verbunden sind; hierbei kann jede Ringelektrode für sich mit dem Außenleiter verbunden sein, oder die beiden Ringelektroden können - wie bekannt - miteinander und nur eine der beiden Ringelektroden mit dem Außenleiter verbunden sein. - Zum Fixieren des Stützisolators wird entweder derart vorgegangen, daß zunächst der Außenleiterabschnitt auf einer Umfangslinie mit mehreren Löchern versehen wird und daß anschließend der Stützisolator mit den beidseits anliegenden Ringelektroden in den Außenleiter eingebracht und eine der beiden Ringelektroden im Bereich der Umfangslinie positioniert wird und daß abschließend diese Ringelektrode mittels gasdichter Loschweißungen fixiert wird, oder es wird derart vorgegangen, daß zunächst der Außenleiterabschnitt auf zwei Umfangslinien, die in vorbestimmtem Abstand zueinander angeordnet sind, mit jeweils mehreren Löchern versehen wird, daß anschließend die eine Ringelektrode im Bereich einer Umfangslinie positioniert und mittels gasdichter Lochschweißungen fixiert wird, daß danach der Stützisolator gegen die erste Ringelektrode gesetzt und die zweite Ringelektrode am Stützisolator anliegend im Bereich der zweiten Umfangslinie positioniert wird und daß abschließend die zweite Ringelektrode ebenfalls mittels gasdichter Lochschweißung fixiert wird.

Bei der Montage eines Stützisolators am Ende eines Außenleiterabschnittes kann es weiterhin zweckmäßig sein, als zweite Ringelektrode eine Elektrode mit einem rohrförmigen Ansatz zu verwenden, wobei der rohrförmige Ansatz die Stoßstelle der beiden Außenleiterabschnitte überdeckt. Dies ist insbesondere dann zweckmäßig, wenn die beiden Außenleiterabschnitte anschließend stumpf miteinander verschweißt werden. Der überstehende rohrförmige Ansatz dient dann als Schweißbadsicherung. Es wird durch diese Maßnahme verhindert, daß der Innenraum des gasisolierten Rohrleiters durch herabtropfendes Metall verschmutzt wird.

Die gemäß der Erfindung vorgesehene Ausgestaltung der Fixierung des scheibenförmigen Stützisolators hat gegenüber den bisher bekannten Lösungen den Vorteil, daß alle Schweißungen von außen erfolgen. Die Bauteile werden im Außenleiter lediglich positioniert und dann die Ringelektroden von außen mit dem Außenleiter verschweißt.

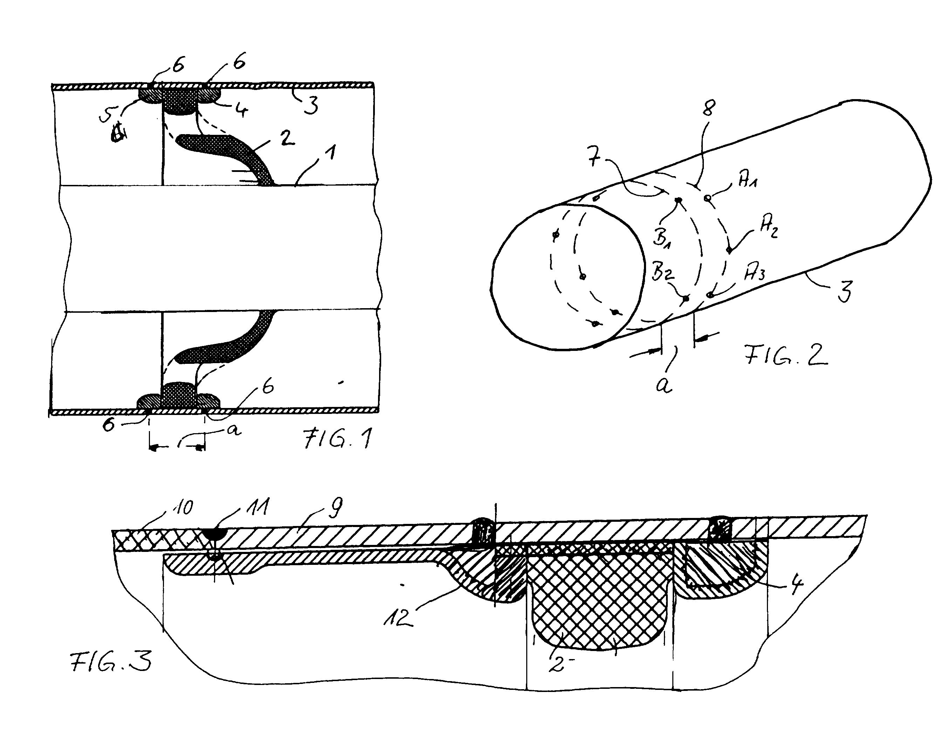

Zwei Ausführungsbeispiele eines gemäß der Erfindung fixierten Stützisolators sind in den Figuren 1 und 3 dargestellt. Anhand dieser Figuren und einer weiteren Figur 2 wird das neue Montageverfahren näher erläutert. Dabei zeigt
- Figur 1: schematisch einen Längsschnitt durch eine gasisolierte Rohrleiteranlage im Bereich eines Stützisolators,
- Figur 2: eine perspektivische Ansicht eines Außenleiterabschnittes und
- Figur 3: einen Längsschnitt ähnlich Figur 1 im Bereich einer Schweißverbindung zweier Außenleiterabschnitte.

Figur 1 zeigt einen Innenleiter 1, der mit Hilfe eines scheibenförmigen Stützisolators 2 in einem Außenleiter 3 zentrisch angeordnet ist. Der Stützisolator 2 ist am Außenleiter 3 mittels zweier Ringelektroden 4 und 5 axial fixiert, die beidseits des Isolators angeordnet und durch gasdichte Lochschweißungen 6 mit diesem verbunden sind.

Zur Fixierung des Stützisolators 2 mittels der Ringelektroden 4 und 5 wird derart vorgegangen, daß zunächst gemäß Figur 2 der Außenleiter 3 entlang zweier Umfangslinien 7 und 8, die voneinander den Abstand a haben, mit Löchern A₁, A₂..., B₁, B₂... in erforderlicher Anzahl (3 bis 6 pro Umfangslinie) versehen wird. Anschließend wird die Ringelektrode 4 in den Außenleiter 2 eingeführt und mittels einer Positioniereinrichtung, deren Bezugsebene die Stirnfläche des Endes des Außenleiters 3 ist, im Bereich der Umfangslinie 8 positioniert. Anschließend wird die Ringelektrode 4 durch die Löcher A₁, A₂,... hindurch mit dem Außenleiter 3 gasdicht verschweißt. Danach wird der Stützisolator 2, der auf dem Innenleiter 1 aufsitzt, gegen die Ringelektrode 4 gesetzt. Die Ringelektrode 5 wird in gleicher Weise wie die Ringelektrode 4 am Stützisolator 2 anliegend positioniert und nachfolgend durch die Löcher B₁, B₂, ... hindurch mit dem Außenleiter 2 gasdicht verschweißt.

Figur 3 zeigt im Ausschnitt einen Stützisolator 2, der nahe einer Schweißverbindung 11 eines Außenleiterabschnittes 9 mit einem weiteren Außenleiterabschnitt 10 angeordnet ist. Außer der Ringelektrode 4 ist zur axialen Fixierung des Stützisolators 2 die Ringelektrode 12 verwendet, die einen rohrförmigen Ansatz 13 aufweist, der über das Ende des Außenleiterabschnittes 9 hinausragt und dieses überdeckt. Im Bereich der Schweißnaht 11 ist der rohrförmige Ansatz 13 zudem etwas dikker ausgeführt und mit einer umlaufenden Ringnut 14 versehen.

Dieser Bereich des Ansatzes 13 dient beim Verschweißen der Außenleiterabschnitte 9 und 10 als Schweißbadsicherung.

Eine montagefreundliche Alternative zum Ausführungsbeispiel gemäß Figur 1 besteht darin, die beiden Ringelektroden ähnlich wie bei Fig. 2 der US-PS 4,161,621 zunächst am Stützisolator zu befestigen und dann - nach Einbringen des Stützisolators in den Außenleiter - die eine der beiden Ringelektroden mittels gasdichter Lochschweißungen zu fixieren.

## Patentansprüche

1. Gasisolierte Energieübertragungsanlage, bei der der rohrförmige Innenleiter mittels isolierender Abstandshalter im rohrförmigen Außenleiter abgestützt ist und bei der als Abstandshalter Scheibenisolatoren verwendet sind, die mittels beidseitig angeordneter und durch Schweißen mit dem Außenleiter verbundener Ringelektroden am Außenleiter fixiert sind,
**dadurch gekennzeichnet,**
daß die Ringelektroden (4,5) mit dem Außenleiter (2) durch mehrere auf wenigstens einer Umfangslinie (7,8) des Außenleiters (2) verteilt angeordnete gasdichte Lochschweißungen (6) verbunden sind.

2. Gasisolierte Energieübertragungsanlage nach Anspruch 1,
**dadurch gekennzeichnet,**
daß jede Ringelektrode (4,5) für sich mit dem Außenleiter (2) verbunden ist.

3. Verfahren zum axialen Fixieren eines scheibenförmigen Stützisolators in einem rohrförmigen Außenleiterabschnitt einer gasisolierten Energieübertragungsanlage nach Anspruch 1, bei dem dem Stützisolator beidseitig je eine am Stützisolator anliegende Ringelektrode zugeordnet wird und die beiden Ringelektroden durch Schweißen am Außenleiterabschnitt fixiert werden,
**dadurch gekennzeichnet,**
daß zunächst der Außenleiterabschnitt (2) auf einer Umfangslinie (7) mit mehreren Löchern (A₁...) versehen wird, und daß anschließend der Stützisolator (2) mit den beidseits anliegenden Ringelektroden in den Außenleiter eingebracht und eine der beiden Ringelektroden (4) im Bereich der Umfangslinie (7) positioniert und abschließend diese Ringelektrode (4) mittels gasdichter Lochschweißungen (6) fixiert wird.

4. Verfahren zum axialen Fixieren eines scheibenförmigen Stützisolators in einem rohrförmigen Außenleiterabschnitt einer gasisolierten Energieübertragungsanlage nach Anspruch 1, bei dem dem Stützisolator beidseitig je eine am Stützisolator anliegende Ringelektrode zugeordnet wird und die beiden Ringelektroden durch Schweißen am Außenleiterabschnitt fixiert werden,
**dadurch gekennzeichnet,**
daß zunächst der Außenleiterabschnitt (2) auf zwei Umfangslinien (7,8), die in vorbestimmtem Abstand (a) zueinander angeordnet sind, mit jeweils mehreren Löchern (A₁..., B₁...) versehen wird,
daß anschließend die eine Ringelektrode (4) im Bereich einer Umfangslinie (7) positioniert und mittels gasdichter Lochschweißungen (6) fixiert wird,
daß danach der Stützisolator (2) gegen die erste Ringelektrode (4) gesetzt und die zweite Ringelektrode (5) am Stützisolator (2) anliegend im Bereich der zweiten Umfangslinie (8) positioniert wird
und daß abschließend die zweite Ringelektrode (5) ebenfalls mittels gasdichter Lochschweißungen (6) fixiert wird.
